# EUROPÄISCHE PATENTSCHRIFT

(11) **EP 1 482 677 B1**
(45) Veröffentlichungstag und Bekanntmachung des Hinweises auf die Patenterteilung: **28.12.2016**
(21) Anmeldenummer: 04100455.7
(22) Anmeldetag: 06.02.2004
(51) Int. Cl.: H04L 12/40

(54) **Verfahren zur Übermittlung von Adressinformation**
Method for sending address information
Procédé de transmission d'information d'adresse

(30) Priorität: 26.05.2003 DE 10323564
(43) Veröffentlichungstag der Anmeldung: 01.12.2004
(73) Patentinhaber: ROBERT BOSCH GMBH, 70442 Stuttgart (DE)
(72) Erfinder: Moritz, Rainer, 70794, Filderstadt (DE)

(56) Entgegenhaltungen:
- EP-A- 1 284 556
- EP-A- 1 298 851
- GB-A- 2 353 448

## Beschreibung

### Stand der Technik

Die Erfindung betrifft Verfahren zur Übermittlung von Adressinformation und zur Datenübertragung in einer oder mehreren Richtungen in einem Kommunikationssystem sowie ein Kommunikationssystem oder -netz, das zur Anwendung dieser Verfahren geeignet ist.

Aus der GB 2 353 448 A ist ein elektronisches Bussystem bekannt, bei welchem identische und "dumme" Knoten in Reihe (Daisy Chain) an einen intelligenten Master angeschlossen sind. Zur Adressierung der Knoten wird in jedem Knoten eine (an jedem Knoten weiter abfallende) Spannung an der Daisy Chain mit einer Spannung an einer separaten Adressleitung verglichen. Die Knoten werden also allein abhängig von ihrer Position in der Daisy Chain identifiziert und adressiert.

Aus der DE 199 46 776 A1 sind ein Verfahren und eine Vorrichtung zur bidirektionalen Kommunikation wenigstens zweier Kommunikationsteilnehmer über eine elektrische Verbindung bekannt. Darin ist die Datenübertragung in einer ersten Kommunikationsrichtung durch Änderungen eines Stromflusses und in einer zweiten Kommunikationsrichtung durch Änderung einer Spannung auf der Verbindung realisiert.

Auch aus der US 4,477,896 ist ein Kommunikationssystem bekannt, in dem Daten über eine gemeinsame einfache Leitung zwischen einer Zentraleinheit und einer Mehrzahl von entfernten Kommunikationsteilnehmern übertragen werden. Dabei werden die Daten von den Kommunikationsteilnehmern mittels Strompulsen und die Daten von der Zentraleinheit mittels bei Kommunikationssystemen, die in einer starken elektromagnetischen Störeinflüssen ausgesetzten Umgebung wie etwa in einem Kraftfahrzeug betrieben werden, und die deshalb robuste und (dementsprechend langsame) Datenüberprotokolle einsetzen müssen.

Bei diesen robusten Datenübertragungsprotokollen kann es zu Signallaufzeiten kommen, die die Anwendung des herkömmlichen Kommunikationssystems bei zeitkritischen Anwendungen (wie etwa einer Airbag-Steuerung) unpraktikabel erscheinen lässt.

### Vorteile der Erfindung

Durch die vorliegende Erfindung werden Verfahren zum Übermitteln von Adressinformation und zur Datenübertragung in einem Kommunikationssystem geschaffen, die gleichzeitig schnell und robust sind und infolgedessen auch für zeitkritische Anwendungen geeignet sind. Ferner werden Kommunikationssysteme bereitgestellt, die zur Anwendung dieser Verfahren geeignet sind.

Im Unterschied zu bekannten Adressierungsverfahren, bei denen eine Adresse eines Kommunikationsteilnehmers in Form eines digitalen Codes übertragen wird, zeichnen sich die erfindungsgemäßen Verfahren, wie in Anspruch 1 und 2 definiert, dadurch aus, dass den - parallel zueinander angeschlossenen - Peripherieeinheiten als Äquivalent eines digitalen Adresscodes ein Werteintervall eines analogen Parameters zugeordnet wird. Da der Peripherieeinheit somit anstelle eines diskreten Werts ein kontinuierliches bei Kommunikationssystemen, die in einer starken elektromagnetischen Störeinflüssen ausgesetzten Umgebung wie etwa in einem Kraftfahrzeug betrieben werden, und die deshalb robuste und (dementsprechend langsame) Datenüberprotokolle einsetzen müssen.

Bei diesen robusten Datenübertragungsprotokollen kann es zu Signallaufzeiten kommen, die die Anwendung des herkömmlichen Kommunikationssystems bei zeitkritischen Anwendungen (wie etwa einer Airbag-Steuerung) unpraktikabel erscheinen lässt.

### Vorteile der Erfindung

Durch die vorliegende Erfindung werden Verfahren zum Übermitteln von Adressinformation und zur Datenübertragung in einem Kommunikationssystem geschaffen, die gleichzeitig schnell und robust sind und infolgedessen auch für zeitkritische Anwendungen geeignet sind. Ferner werden Kommunikationssysteme bereitgestellt, die zur Anwendung dieser Verfahren geeignet sind.

Im Unterschied zu bekannten Adressierungsverfahren, bei denen eine Adresse eines Kommunikationsteilnehmers in Form eines digitalen Codes übertragen wird, zeichnen sich die erfindungsgemäßen Verfahren, wie in Anspruch 1 und 2 definiert, dadurch aus, dass den Peripherieeinheiten als Äquivalent eines digitalen Adresscodes ein Werteintervall eines analogen Parameters zugeordnet wird. Da der Peripherieeinheit somit anstelle eines diskreten Werts ein kontinuierliches Intervall zugeordnet ist, ist die Adressierung tolerant gegen nicht zu große Streuungen des Parameterwerts. Die Zeit, die der Parameter nach einer Änderung zum Einpendeln auf einen neuen Wert braucht, ist kürzer, als wenn zur Adressierung eine Folge von unterschiedlichen binären Pegelwerten übertragen werden muss.

Das Prinzip der Erfindung ist anwendbar zum Übermitteln einer Zieladresse, d.h. zum Auswählen einer unter mehreren Peripherieeinheiten von einer Zentraleinheit aus, um die Peripherieeinheit zu einer Tätigkeit zu veranlassen, wie in Anspruch 1 definiert, oder zum Übermitteln einer Absenderadresse, d.h. um einer Zentraleinheit, die Signale von mehreren Peripherieeinheiten empfangen kann, die Identität der das Signal sendenden Peripherieeinheit mitzuteilen, um sie zu einer für die sendenden Peripherieeinheit spezifischen Tätigkeit zu veranlassen.

Um eine bestimmte Peripherieeinheit aus der Mehrzahl der Peripherieeinheiten verlässlich spezifizieren zu können, ist es von Vorteil, wenn jeder Peripherieeinheit ein für sie spezifisches Intervall des Parameters zugeordnet wird. Das heißt insbesondere, dass sich die den einzelnen Peripherieeinheiten zugeordneten Intervalle nicht überlappen dürfen. Es darf allerdings Intervalle geben, die mehreren Peripherieeinheiten gleichzeitig zugeordnet sind, in dem Sinne, dass diese mehreren Peripherieeinheiten gleichzeitig adressiert sind, wenn der Parameter einen Wert in einem solchen Intervall annimmt.

Die erfindungsgemäßen Verfahren zur Übermittlung von Adressinformation einer Peripherieeinheit lassen sich besonders vorteilhaft bei einem Verfahren zur Datenübertragung an eine oder von einer Peripherieeinheit anwenden. Während die Peripherieeinheit erfindungsgemäß adressiert ist, wird der Parameter von einem der Kommunikationsteilnehmer - der Zentraleinheit oder der Peripherieeinheit - mit einem Datenstrom derart moduliert, dass der Parameter innerhalb des Fensters verbleibt. Am jeweils anderen Kommunikationsteilnehmer wird der Parameter anschließend demoduliert, um den Datenstrom wieder herzustellen. Das Verfahren eignet sich gut zum asynchronen Übertragen von Datenblöcken von nicht vorab definierter Länge: Solange der Parameter im einer der Peripherieeinheiten zugeordneten Intervall bleibt, ist diese als Empfänger (oder Sender) des Datenstroms gekennzeichnet, sobald der Parameter das Intervall verlässt, ist dies nicht mehr der Fall.

Ein solches Verfahren zur Datenübertragung ist auch vorteilhaft zum Abfragen von Daten von einer der Peripherieeinheiten durch die Zentraleinheit einsetzbar. Dabei adressiert die Zentraleinheit eine Peripherieeinheit wie oben beschrieben durch Ausgeben eines Signals mit einem Wert des Parameters in dem der zu adressierenden Peripherieeinheit zugeordneten Intervall. Solange die Peripherieeinheit adressiert ist, moduliert sie das Signal mit dem zu sendenden Datenstrom. Die Zentraleinheit empfängt und demoduliert das Signal, um den Datenstrom wieder herzustellen.

Obwohl für den Parameter grundsätzlich ein beliebiger Parameter eines elektrischen Signals verwendet werden kann, wie z.B. eine Frequenz, wird der Parameter bevorzugt aus der elektrischen Spannung oder Stromstärke ausgewählt.

Es kann vorteilhaft sein, wenn der Parameter für verschiedene Kommunikationsrichtungen verschieden gewählt wird. So kann durch die Wahl der Stromstärke als Parameter die Empfindlichkeit der Übertragung gegen elektromagnetische Störungen gering gemacht werden. Eine Adressgeneratorschaltung, die die Stromstärke als Parameter verwendet, ist jedoch aufwändiger und teurer als eine die die Spannung als Parameter verwendet. Es ist daher unter dem Gesichtspunkt der Wirtschaftlichkeit zweckmäßig, für die Adressübermittlung von der Zentraleinheit die Stromstärke als Parameter und für die Übermittlung von den Peripherieeinheiten an die Zentraleinheit die Spannung zu verwenden.

Bevorzugterweise hat das Kommunikationsmedium, das die Peripherieeinheiten mit der Zentraleinheit verbindet, eine Sternstruktur. Alternativ dazu kann das Kommunikationsmedium aber auch eine Baumstruktur oder eine Ringstruktur aufweisen.

Nachfolgend wird die Erfindung anhand eines bevorzugten Ausführungsbeispieles unter Bezugnahme auf Zeichnungen näher beschrieben. Dabei zeigen:
- Fig. 1: eine schematische Darstellung eines erfindungsgemäßen Kommunikationssystems;
- Fig. 2: ein Blockdiagramm eines Sende-/Empfangteils einer Zentral- oder Peripherieeinheit des Kommunikationssystems aus Fig. 1; und
- Fig. 3: ein Blockdiagramm eines Sende-/Empfangteils einer Peripherieeinheit;
- Fig. 4: ein Strom-Zeit- und ein Spannungs-Zeitdiagramm zu einem ersten Betriebsverfahren des Kommunikationssystems;
- Fig. 5: ein Strom-Zeit- und ein Spannungs-Zeitdiagramm zu einem zweiten Betriebsverfahren; und
- Fig. 6: eine zweite Ausgestaltung des Sende/Empfangsteils einer Peripherieeinheit.

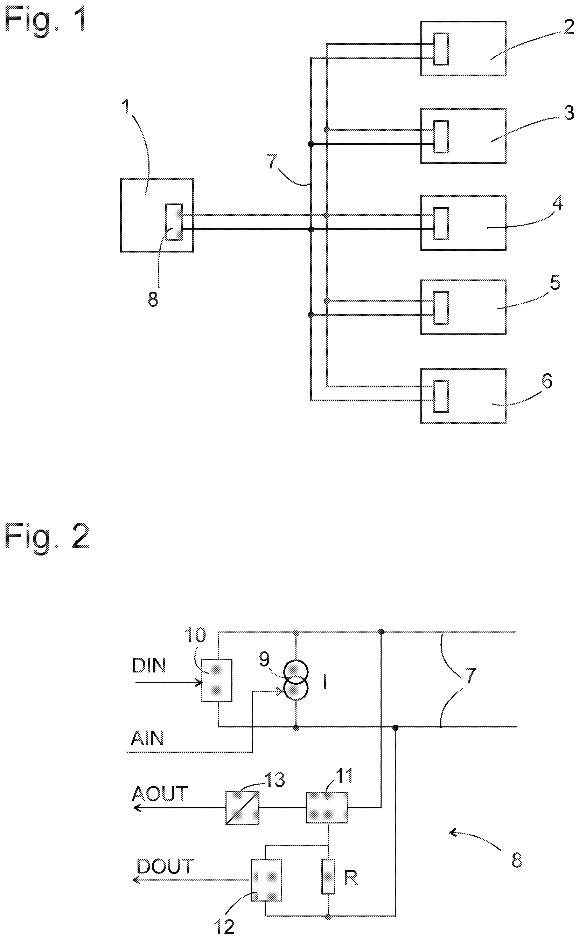

Eine schematische Darstellung eines erfindungsgemäßen Kommunikationssystems ist in Fig. 1 gezeigt. Das Kommunikationssystem umfasst eine Zentraleinheit 1 sowie in diesem Beispiel fünf Peripherieeinheiten 2 bis 6, die mittels eines Kommunikationsmediums 7 mit der Zentraleinheit 1 verbunden sind. Bei der Zentraleinheit 1 kann es sich beispielsweise um einen Mikrocontroller, z.B. in Form eines Motorsteuergeräts oder Bordcomputers für ein Kraftfahrzeug, handeln. Als Beispiele für die Kommunikationsteilnehmer 2 bis 6 seien exemplarisch Sensoren oder Aktoren zum Erfassen oder Beeinflussen von Betriebsparametern des Kraftfahrzeugs genannt. Das Kommunikationsmedium 7 ist ein zweiadriger elektrischer Leiter, der von der Zentraleinheit 1 ausgeht und an den die fünf Peripherieeinheiten 2 bis 6 zueinander parallel angeschlossen sind.

Fig. 2 ist ein Blockdiagramm eines Sende-/Empfangsteils 8 der Zentraleinheit 1. Das Sende-/Empfangsteil 8 hat zwei Eingangs- und zwei Ausgangsleitungen für digitale Signale AIN, DIN, AOUT, DOUT, die mit einem nicht gezeigten Prozessor der Zentraleinheit 1 verbunden sind. Das Signal DIN steuert eine elektrische Leistungsquelle, hier eine Konstantstromquelle, an, die jeweils einen dem angelegten Digitalsignal AIN entsprechende konstante Stromstärke liefert. (Bei einer Peripherieeinheit ist der Wert des Signals AIN fest eingestellt). Die von der Leistungsquelle 9 gelieferten Stromwerte liegen jeweils in der Mitte eines Intervalls, das einer durch den Wert des Adresssignals AIN bezeichneten Peripherieeinheit zugeordnet ist.

Parallel zur Leistungsquelle 9 ist ein Modulator 10 geschaltet, der ein mit dem Dateneingangssignal DIN moduliertes bipolares Signal liefert, welches sich der Ausgabe der Leistungsquelle 9 überlagert. Die Amplitude des bipolaren Signals ist so festgelegt, dass das durch Überlagerung erhaltene Signal das der jeweils durch das Adresssignal AIN bezeichneten Peripherieeinheit zugeordnete Intervall nicht verlässt.

Parallel zu dem aus Leistungsquelle 9 und Modulator 10 aufgebauten Sendeteil ist ein Empfangsteil mit einer Frequenzweiche 11 und einem Demodulator 12 geschaltet. Die Frequenzweiche 11 trennt von einem über die Signalleitung 7 eintreffenden Signal einen Gleichspannungsanteil ab, der, über einen AD-Wandler 13 digitalisiert und als Adresssignal AOUT dem (nicht gezeigten) Prozessor zugeführt wird. Der modulierte Anteil des empfangenen Signals wird von der Frequenzweiche 11 dem Demodulator 12 zugeführt, der daraus einen digitalen Datenstrom rekonstruiert. Anhand des Werts des Adresssignals AOUT kann der Prozessor diesem Datenstrom jederzeit seinen Absender zuordnen und bei der Verarbeitung des Datenstroms berücksichtigen.

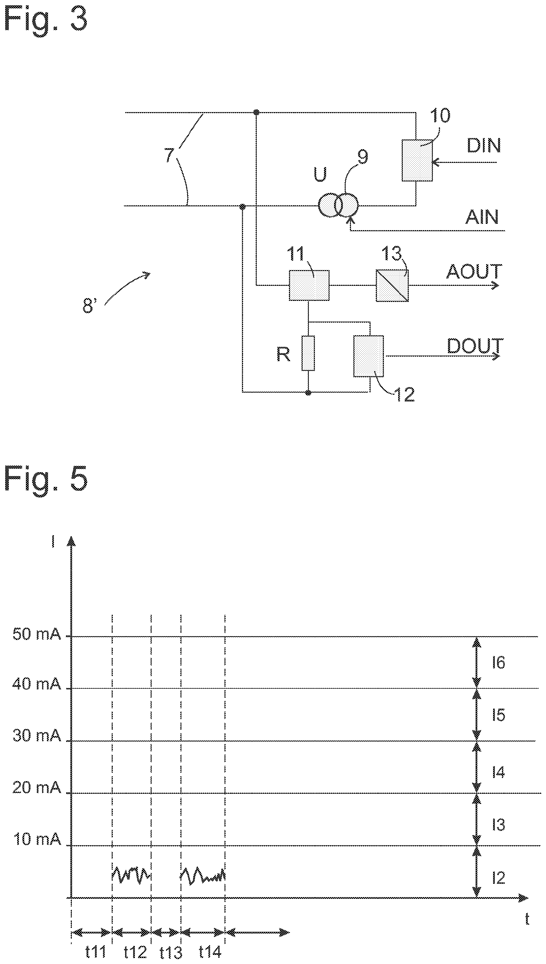

Fig. 3 zeigt das Sende-/Empfangsteil einer der Peripherieeinheiten 2 bis 6. Das Sendeteil besteht wie bei der Zentraleinheit im Wesentlichen aus Leistungsquelle 9 und Modulator 10, wobei die Leistungsquelle 9 hier eine Konstantspannungsquelle ist, die einen Spannungswert in Abhängigkeit vom ihr zugeführten digitalen Adresseingangssignal AIN liefert. Das Adresseingangssignal AIN ist repräsentativ für die Identität der Peripherieeinheit und daher im Betrieb unveränderlich. Es kann an der Peripherieeinheit z.B. durch Mikroschalter oder Jumper einstellbar sein. Der von der Leistungsquelle 9 gelieferte Spannungswert bildet die Mitte eines der Peripherieeinheit zugeordneten, für sie spezifischen Spannungsintervalls. Der Modulator 10 überlagert dieser konstanten Spannung einen variablen Anteil, dem ein am Dateneingang DIN empfangenes Datensignal aufmoduliert ist. Die Amplitude des variablen Anteils ist so festgelegt, dass die Gesamtausgangsspannung des Sendeteils stets innerhalb des der betreffenden Peripherieeinheit zugeteilten Spannungsintervalls bleibt.

Das Empfangsteil 8' der Peripherieeinheit ist ähnlich aufgebaut wie das der Zentraleinheit 1. Eine Frequenzweiche zerlegt das empfangene Stromsignal in einen Gleichstromanteil, dessen Wert diejenige Peripherieeinheit bezeichnet, für die die von der Zentraleinheit 1 über die Signalleitung 7 gesendeten Daten bestimmt sind. Ein Wechselanteil dieses Signals wird im Demodulator 12 demoduliert, um den von der Zentraleinheit 1 gesendeten Datenstrom zu rekonstruieren. Wenn die vom AD-Wandler 13 aus dem Gleichanteil erhaltene Adresse AOUT nicht die Adresse der betreffenden Peripherieeinheit ist, wird der rekonstruierte Datenstrom DOUT vom Demodulator 12 verworfen, oder der Demodulator 12 wird deaktiviert, so dass kein solcher Datenstrom entsteht.

Dabei ist zu beachten, dass die Signalstromstärke, die jede der parallel geschalteten Peripherieeinheiten 2 bis 6 von der Zentraleinheit 1 empfängt, nur ein n-tel der Ausgangsstromstärke der Zentraleinheit ist, wenn n die Zahl der Peripherieeinheiten ist. Dem kann auf einfache Weise Rechnung getragen werden, indem die Auflösung des AD-Wandlers 13 jeweils an die Zahl der Peripherieeinheiten angepasst wird.

Die Zentraleinheit und die Peripherieeinheiten teilen sich die Verwendung der Signalleitung 7 im Zeitmultiplex. D.h. zu einem gegebenen Zeitpunkt dient die Signalleitung 7 entweder der Datenübertragung von der Zentraleinheit 1 an eine der Peripherieeinheiten 2 bis 6 oder von einer der Peripherieeinheiten an die Zentraleinheit.

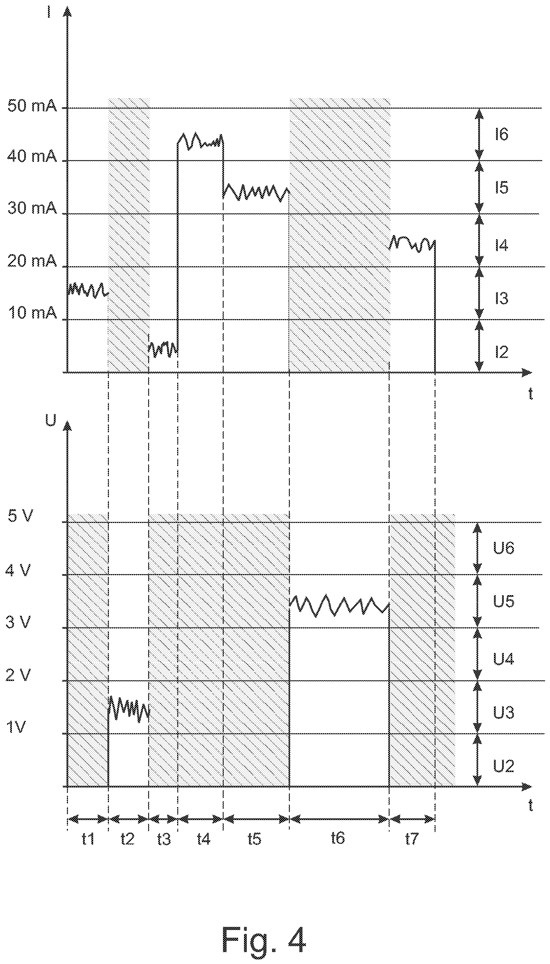

Fig. 4 veranschaulicht diesen Sachverhalt anhand eines Zeitdiagrams der Stromstärke I und der Spannung U auf der Signalleitung 7. Dabei wird angenommen, dass jeder Peripherieeinheit für die Datenübertragung zu ihr ein Stromstärkenintervall jeweils von 0 bis 10 mA, 10 mA bis 20 mA, 20 mA bis 30 mA, 30 mA bis 40 mA und 40 mA bis 50 mA des Ausgangsstroms der Zentraleinheit 1 und für die Übertragung zur Zentraleinheit 1 ein Spannungsintervall von 0 bis 1 V, 1 V bis 2 V, 2 V bis 3 V, 3V bis 4 V bzw. 4 V bis 5 V zugeordnet ist. Die Stromachse des Strom-Zeitdiagramms ist dementsprechend in einem Bereich von 0 mA bis 50 mA in fünf Intervalle von 10 mA Breite eingeteilt. Analog dazu ist die Spannungsachse des Spannungs-Zeit-Diagramms in fünf Intervalle eingeteilt. Die mit Ij bzw. Uj, j = 2, 3, ..., 6 bezeichneten Intervalle sind jeweils der Peripherieeinheit n zugeordnet.

Im Zeitintervall t1 liefert die Stromquelle 9 der Zentraleinheit einen konstanten Strom von 75 mA, der vom Modulator 10 mit einem Datenstrom mit einem Signalhub von max. ± 25 mA moduliert wird. Das Empfangsteil der Zentraleinheit 1 ist gleichzeitig hochohmig geschaltet, so dass sich der Ausgangsstrom des Sendeteils zu gleichen Teilen auf die fünf Peripherieeinheiten 2 bis 6 verteilt.

Die Sendeteile der Peripherieeinheiten sind hochohmig, so dass durch das Empfangsteil jeder Peripherieeinheit ein Strom von 15 ± 5 mA fließt. Der Gleichanteil dieses Stroms wird in der Frequenzweiche 11 abgetrennt und dem AD-Wandler 13 zugeführt. Die Peripherieeinheit 3 stellt fest, dass dieser Strom im ihr zugeordneten Stromintervall liegt und verarbeitet den an ihrem Demodulator 12 wiederhergestellten Datenstrom. An allen anderen Peripherieeinheiten wird der Datenstrom verworfen.

In dem von der Zentraleinheit gesendeten Datenstrom können auch Anweisungen an die einzelnen Peripherieeinheiten enthalten sein, so z.B. eine Anweisung, bestimmte in der Peripherieeinheit vorhandene Daten nach Abschluss der Übertragung an die Peripherieeinheit von dort an die Zentraleinheit zu übertragen. Dies geschieht im Zeitintervall t2. Hier ist das Empfangsteil der Peripherieeinheit 3 hochohmig, und das Sendeteil erzeugt ein Spannungssignal mit einem Gleichanteil von 1,5 V, dem ein Datenstrom mit einem Signalhub von nicht mehr als 0,5 V aufmoduliert ist.

Im Anschluss daran, in den Zeitintervallen t3, t4, t5, sendet die Zentraleinheit 1 nacheinander an die Peripherieeinheiten 2, 6, 5, indem sie jeweils ein Stromsignal mit einem Gleichanteil von 5 x 5 = 25 mA, 5 x 45 = 225 bzw. 5 x 35 = 175 mA sendet. Die im Zeitintervall t5 adressierte Peripherieeinheit 5 sendet ihrerseits im Intervall t6, usw..

Bei diesem Kommunikationsverfahren hat die Zentraleinheit ständig die Verfügungsgewalt über die Übertragungskapazität der Signalleitung 7, entweder indem sie sie selbst nutzt, oder indem sie sie den Peripherieeinheiten für jeweils in einem übertragenen Befehl spezifizierte Zeitspannen zuweist.

Alternativ dazu sind im Rahmen der Erfindung auch Übertragungssysteme und Verfahren denkbar, bei denen sich Zentral- und Peripherieeinheiten den Zugriff auf den Bus teilen, z.B. nach dem Aloha-Prinzip.

Fig. 5 zeigt ein Zeitdiagramm der auf der Signalleitung 7 übertragenen Signale bei einer solchen Ausgestaltung. Der Aufbau der Sende-/Empfangsteile wird hier als für Zentral- und Peripherieeinheiten identisch angenommen. Genauer gesagt sollen die Sende-/Empfangseinheiten den in Fig. 2 gezeigten Aufbau haben, d.h. die Stromstärke wird als informationstragender Parameter des Signals für die Übertragung in beide Richtungen genutzt.

In dem mit t11 bezeichneten Zeitintervall sendet keine der Einheiten 1 bis 6, und die Stromstärke auf der Leitung 7 ist Null. In diesem Zustand kann jede beliebige Einheit, die Daten zu übertragen hat, zu senden beginnen. Im Zeitintervall t12 sendet die Zentraleinheit 1 ein Datensignal, dessen Stromstärke im Intervall I2 liegt und das infolgedessen von der Peripherieeinheit 2 ausgewertet wird. Im Zeitintervall t14 sendet die Peripherieeinheit 2 eine Antwort. Damit die Zentraleinheit 1 dieses Signal mit einer Stromstärke mit Gleichanteil von 5 mA empfängt, muss die Peripherieeinheit ein n = 5-mal so starkes Signal erzeugen. Die anderen Peripherieeinheiten haben keine Möglichkeit, zu unterscheiden, ob die in den Zeitintervallen t12, t14 übertragenen Signale von der Zentraleinheit oder der Peripherieeinheit 2 stammen, doch ist dies ohne Belang, da sie diese Signale auch nicht verarbeiten müssen.

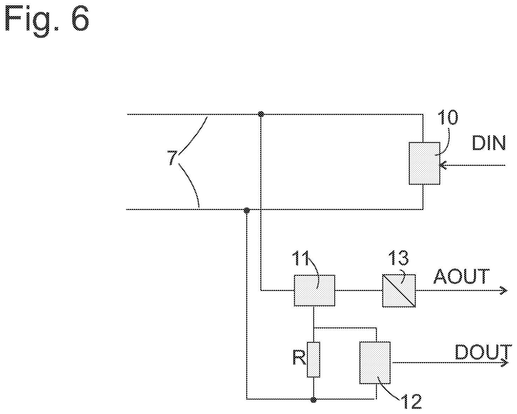

Ein Sende-/Empfangsteil 8" für eine der Peripherieeinheiten 2 bis 6 gemäß einer vereinfachten Ausgestaltung der Erfindung ist in Fig. 6 dargestellt. Im Sendeteil ist die Leistungsquelle 9 weggelassen. Allein der Modulator 10 wirkt als ein durch einen zugeführten Datenstrom modulierbarer Widerstand. Bei dieser Ausgestaltung erzeugt die Leistungsquelle 9 des Sendeteils der Zentraleinheit 1 nicht nur dann eine Gleichspannung in einem einer jeweils adressierten Peripherieeinheit zugeordneten Intervall, wenn die Zentraleinheit Daten an diese sendet, sondern auch, wenn sie die Übertragung von Daten von der Peripherieeinheit erwartet. D.h., um bestimmte Daten von einer Peripherieeinheit abzufragen, adressiert die Zentraleinheit die betreffende Peripherieeinheit durch Ausgeben eines Gleichstroms in dem der Peripherieeinheit zugeordneten Intervall auf die Leitung 7, Modulieren dieses Gleichstroms mit einem Befehl an die Peripherieeinheit, die gewünschten Daten zu senden, und hält im Anschluss daran den Gleichstrom aufrecht, auch wenn sie selbst keine Daten mehr zu übertragen hat. Während die Zentraleinheit 1 sendet, ist ihr Empfangsteil hochohmig; sobald sie den Befehl zum Übertragen von Daten an die Peripherieeinheit übermittelt hat, geht das Empfangsteil der adressierten Peripherieeinheit in den hochohmigen Zustand und das Empfangsteil der Zentraleinheit in den niederohmigen Zustand über, so dass die Zahl von parallel geschalteten Empfangsteilen, auf die sich der von der Stromquelle 9 gelieferte Gleichstrom verteilt, konstant bleibt. Der vom Modulator 10 der adressierten Peripherieeinheit modulierte Gleichstrom wird am Empfangsteil der Zentraleinheit empfangen und ausgewertet.

## Patentansprüche

1. Verfahren zum Übermitteln von Adressinformation in einem Kommunikationssystem mit einer Zentraleinheit und einer Mehrzahl von Peripherieeinheiten (2 bis 6), die über ein Kommunikationsmedium (7) verbunden sind, wobei die Peripherieeinheiten (2 bis 6) an das Kommunikationsmedium (7) zueinander parallel angeschlossen sind, mit den Schritten:
a) Zuordnen jeweils eines Intervalls (12-16; U2-U6) eines Parameters eines auf dem Kommunikationsmedium (7) ausbreitungsfähigen Signals zu jeder Peripherieeinheit (2 bis 6),
b) Ausgeben eines Signals auf das Kommunikationsmedium (7) durch die Zentraleinheit,
c) Überwachen des Parameters des Signals durch die Peripherieeinheiten (2 bis 6) und Erkennen einer Peripherieeinheit (2 bis 6) als adressiert, wenn die Peripherieeinheit den Parameter des Signals in dem ihr zugeordneten Intervall (I2-I6; U2-U6) findet.

2. Verfahren zum Übermitteln von Adressinformation in einem Kommunikationssystem mit einer Zentraleinheit und einer Mehrzahl von Peripherieeinheiten (2 bis 6), die über ein Kommunikationsmedium (7) verbunden sind, wobei die Peripherieeinheiten (2 bis 6) an das Kommunikationsmedium (7) zueinander parallel angeschlossen sind, mit den Schritten:
a') Zuordnen jeweils eines Intervalls (12-16; U2-U6) eines Parameters eines auf dem Kommunikationsmedium (7) ausbreitungsfähigen Signals zu jeder Peripherieeinheit (2 bis 6),
b') Ausgeben eines Signals auf das Kommunikationsmedium (7) durch eine der Peripherieeinheiten (2 bis 6),
c') Überwachen des Parameters des Signals durch die Zentraleinheit und Erkennen einer Peripherieeinheit (2 bis 6) als Absender des Signals, wenn die Zentraleinheit den Parameter des Signals in dem dieser Peripherieeinheit zugeordneten Intervall (12-16; U2-U6) findet.

3. Verfahren nach Anspruch 1 oder 2, **dadurch gekennzeichnet, dass** jeder Peripherieeinheit (2 bis 6) ein für sie spezifisches Intervall (I2-I6; U2-U6) des Parameters zugeordnet wird.

4. Verfahren nach einem der vorhergehenden Ansprüche, **dadurch gekennzeichnet, dass** das Kommunikationsmedium (7) ein elektrischer Leiter ist und dass der Parameter eine Stromstärke oder eine Spannung auf dem Leiter ist.

5. Verfahren nach Anspruch 1, **dadurch gekennzeichnet, dass** zu einer Datenübertragung von der Zentraleinheit an eine Peripherieeinheit (2 bis 6) aus der Mehrzahl von über das Kommunikationsmedium (7) verbundenen Peripherieeinheiten (2 bis 6) zusätzlich folgende Schritte durchgeführt werden:
- Modulieren des Parameters mit einem Datenstrom an der Zentraleinheit derart, dass der Parameter innerhalb des Intervalls (I2-I6; U2-U6) bleibt,
- Demodulieren des Parameters an der adressierten Peripherieeinheit (2 bis 6), um den Datenstrom wiederherzustellen.

6. Verfahren nach Anspruch 2, **dadurch gekennzeichnet, dass** zu einer Datenübertragung von einer Peripherieeinheit (2 bis 6) aus der Mehrzahl von über ein Kommunikationsmedium (7) verbundenen Peripherieeinheiten (2 bis 6) an die Zentraleinheit zusätzlich folgende Schritte durchgeführt werden:
- Modulieren des Parameters mit einem Datenstrom an der Peripherieeinheit (2 bis 6) derart, dass der Parameter innerhalb des Intervalls (I2-I6; U2-U6) bleibt,
- Demodulieren des Parameters an der Zentraleinheit, um den Datenstrom wiederherzustellen.

7. Verfahren zur Datenkommunikation zwischen einer Zentraleinheit und einer Peripherieeinheit eines Kommunikationssystems, bei dem für die Datenübertragung von der Zentraleinheit an die Peripherieeinheit ein Verfahren nach Anspruch 5 und für die Datenübertragung von der Peripherieeinheit an die Zentraleinheit ein Verfahren nach Anspruch 6 eingesetzt wird, **dadurch gekennzeichnet, dass** für die Datenübertragung von der Zentraleinheit an die Peripherieeinheit ein anderer Parameter moduliert wird als für die Datenübertragung von der Peripherieeinheit an die Zentraleinheit.

8. Kommunikationssystem mit einer Zentraleinheit (1) und einer Mehrzahl von Peripherieeinheiten (2 bis 6), die über ein Kommunikationsmedium (7) verbunden sind, wobei die Peripherieeinheiten (2 bis 6) an das Kommunikationsmedium (7) zueinander parallel angeschlossen sind und wobei auf dem Kommunikationsmedium (7) ein Signal ausbreitungsfähig ist, **dadurch gekennzeichnet, dass** jeder Peripherieeinheit ein Intervall (I2-I6; U2-U6) eines Parameters des Signals zugeordnet ist, dass die Zentraleinheit eine Adressengeneratorschaltung zum Ausgeben des Signals mit einem Wert des Parameters in dem einer zu adressierenden Peripherieeinheit zugeordneten Intervall umfasst und dass jede Peripherieeinheit eine Adressdecoderschaltung umfasst, die anspricht, wenn sie das Signal mit einem Wert des Parameters in dem der Peripherieeinheit zugeordneten Intervall empfängt.

9. Kommunikationssystem nach Anspruch 10, **dadurch gekennzeichnet, dass** die Zentraleinheit einen Sender zum Modulieren des Signals mit einem Datenstrom und jede Peripherieeinheit einen durch das Ansprechen der Adressdecoderschaltung aktivierbaren Empfänger zum Demodulieren des Signals und Wiederherstellen des Datenstroms aufweist.

10. Kommunikationssystem nach Anspruch 10 oder 11, **dadurch gekennzeichnet, dass** die jede Peripherieeinheit einen durch das Ansprechen der Adressdecoderschaltung aktivierbaren Sender zum Modulieren des Signals mit einem Datenstrom und die Zentraleinheit einen Empfänger zum Demodulieren des Signals und Wiederherstellen des Datenstroms aufweist.

11. Kommunikationssystem mit einer Zentraleinheit (1) und einer Mehrzahl von Peripherieeinheiten (2 bis 6), die über ein Kommunikationsmedium (7) verbunden sind, wobei die Peripherieeinheiten (2 bis 6) an das Kommunikationsmedium (7) zueinander parallel angeschlossen sind und wobei auf dem Kommunikationsmedium (7) ein Signal ausbreitungsfähig ist, **dadurch gekennzeichnet, dass** jeder Peripherieeinheit ein Intervall (I2-I6; U2-U6) eines Parameters des Signals zugeordnet ist, dass jede Peripherieeinheit eine Adressengeneratorschaltung zum Ausgeben des Signals mit einem Wert des Parameters in dem dieser Peripherieeinheit zugeordneten Intervall umfasst und dass die Zentraleinheit eine Adressdecoderschaltung umfasst, die die das Signal erzeugende Peripherieeinheit anhand des Werts des Parameters identifiziert.

12. Kommunikationssystem nach Anspruch 13, **dadurch gekennzeichnet, dass** jede Peripherieeinheit einen Sender zum Modulieren des Signals mit einem Datenstrom und die Zentraleinheit einen Empfänger zum Demodulieren des Signals und Wiederherstellen des Datenstroms aufweist.

## Claims

1. Method for transmitting address information in a communication system having a central unit and a plurality of peripheral units (2 to 6) that are connected via a communication medium (7), wherein the peripheral units (2 to 6) are connected to the communication medium (7) in parallel with one another, having the steps of:
a) allocation of a respective interval (12-16; U2-U6) of a parameter of a signal capable of propagation on the communication medium (7) to each peripheral unit (2 to 6),
b) output of a signal to the communication medium (7) by the central unit,
c) monitoring of the parameter of the signal by the peripheral units (2 to 6) and identification of a peripheral unit (2 to 6) as addressed if the peripheral unit finds the parameter of the signal in its allocated interval (12-16; U2-U6).

2. Method for transmitting address information in a communication system having a central unit and a plurality of peripheral units (2 to 6) that are connected via a communication medium (7), wherein the peripheral units (2 to 6) are connected to the communication medium (7) in parallel with one another, having the steps of:
a') allocation of a respective interval (12-16; U2-U6) of a parameter of a signal capable of propagation on the communication medium (7) to each peripheral unit (2 to 6),
b') output of a signal to the communication medium (7) by one of the peripheral units (2 to 6),
c') monitoring of the parameter of the signal by the central unit and identification of a peripheral unit (2 to 6) as the sender of the signal if the central unit finds the parameter of the signal in the interval (12-16; U2-U6) allocated to this peripheral unit.

3. Method according to Claim 1 or 2, **characterized in that** each peripheral unit (2 to 6) is allocated an interval (12-16; U2-U6) of the parameter that is specific to it.

4. Method according to one of the preceding claims, **characterized in that** the communication medium (7) is an electrical conductor and **in that** the parameter is a current or a voltage on the conductor.

5. Method according to Claim 1, **characterized in that** a data transmission from the central unit to a peripheral unit (2 to 6) from the plurality of peripheral units (2 to 6) connected via the communication medium (7) additionally involves the following steps being performed:
- modulation of the parameter with a data stream on the central unit such that the parameter remains within the interval (12-16; U2-U6),
- demodulation of the parameter on the addressed peripheral unit (2 to 6) in order to restore the data stream.

6. Method according to Claim 2, **characterized in that** a data transmission from a peripheral unit (2 to 6) from the plurality of peripheral units (2 to 6) connected via a communication medium (7) to the central unit additionally involves the following steps being performed:
- modulation of the parameter with a data stream on the peripheral unit (2 to 6) such that the parameter remains within the interval (12-16; U2-U6),
- demodulation of the parameter on the central unit in order to restore the data stream.

7. Method for data communication between a central unit and a peripheral unit of a communication system, in which the data transmission from the central unit to the peripheral unit involves a method according to Claim 5 and the data transmission from the peripheral unit to the central unit involves a method according to Claim 6 being used, **characterized in that** the data transmission from the central unit to the peripheral unit involves a different parameter being modulated than for the data transmission from the peripheral unit to the central unit.

8. Communication system having a central unit (1) and a plurality of peripheral units (2 to 6) that are connected via a communication medium (7), wherein the peripheral units (2 to 6) are connected to the communication medium (7) in parallel with one another and wherein a signal is capable of propagation on the communication medium (7), **characterized in that** each peripheral unit has an allocated interval (12-16; U2-U6) of a parameter of the signal, **in that** the central unit comprises an address generator circuit for outputting the signal with a value of the parameter in the interval allocated to a peripheral unit that is to be addressed and **in that** each peripheral unit comprises an address decoder circuit that responds when it receives the signal with a value of the parameter in the interval allocated to the peripheral unit.

9. Communication system according to Claim 10, **characterized in that** the central unit has a transmitter for modulating the signal with a data stream, and each peripheral unit has a receiver, activable by virtue of the response by the address decoder circuit, for demodulating the signal and restoring the data stream.

10. Communication system according to Claim 10 or 11, **characterized in that** each peripheral unit has a transmitter, activable by virtue of the response by the address decoder circuit, for modulating the signal with a data stream, and the central unit has a receiver for demodulating the signal and restoring the data stream.

11. Communication system having a central unit (1) and a plurality of peripheral units (2 to 6) that are connected via a communication medium (7), wherein the peripheral units (2 to 6) are connected to the communication medium (7) in parallel with one another and wherein a signal is capable of propagation on the communication medium (7), **characterized in that** each peripheral unit has an allocated interval (12-16; U2-U6) of a parameter of the signal, **in that** each peripheral unit comprises an address generator circuit for outputting the signal with a value of the parameter in the interval allocated to this peripheral unit, and **in that** the central unit comprises an address decoder circuit that identifies the peripheral unit generating the signal on the basis of the value of the parameter.

12. Communication system according to Claim 13, **characterized in that** each peripheral unit has a transmitter for modulating the signal with a data stream, and the central unit has a receiver for demodulating the signal and restoring the data stream.

## Revendications

1. Procédé de transmission d'informations d'adresse dans un système de communication comportant une unité centrale et une pluralité d'unités périphériques (2 à 6) qui sont connectées par l'intermédiaire d'un support de communication (7), dans lequel les unités périphériques (2 à 6) sont raccordées au support de communication (7) en parallèle les unes par rapport aux autres, comportant les étapes consistant à :
a) associer un intervalle respectif (I2-I6 ; U2-U6) d'un paramètre d'un signal apte à se propager sur le support de communication (7) à chaque unité périphérique (2 à 6),
b) délivrer un signal sur le support de communication (7) par l'intermédiaire de l'unité centrale,
c) surveiller le paramètre du signal au moyen des unités périphériques (2 à 6) et identifier une unité périphérique (2 à 6) comme étant adressée lorsque l'unité périphérique trouve que le paramètre du signal se situe à l'intérieur de l'intervalle qui lui est associé (12-16 ; U2-U6).

2. Procédé de transmission d'informations d'adresses dans un système de communication comportant une unité centrale et une pluralité d'unités périphériques (2 à 6) qui sont connectées par l'intermédiaire d'un support de communication (7), dans lequel les unités périphériques (2 à 6) sont raccordées au système de communication (7) en parallèle les unes par rapport aux autres, comportant les étapes consistant à :
a') associer un intervalle respectif (I2-I6 ; U2-U6) d'un paramètre d'un signal apte à se propager sur le support de communication (7) à chaque unité périphérique (2 à 6),
b') délivrer un signal sur le support de communication (7) par l'intermédiaire de l'une des unités périphériques (2 à 6),
c') surveiller le paramètre du signal au moyen de l'unité centrale et identifier une unité périphérique (2 à 6) comme étant l'émetteur du signal lorsque l'unité centrale trouve que le paramètre du signal se situe à l'intérieur de l'intervalle (12-16, U2-U6) associé à ladite unité périphérique.

3. Procédé selon la revendication 1 ou 2, **caractérisé en ce qu'**à chaque unité périphérique (2 à 6) est associé un intervalle spécifique (12-16 ; U2-U6) du paramètre.

4. Procédé selon l'une quelconque des revendications précédentes, **caractérisé en ce que** le support de communication (7) est un conducteur électrique et **en ce que** le paramètre est une intensité de courant ou une tension sur le conducteur.

5. Procédé selon la revendication 1, **caractérisé en ce qu'**en plus d'un transfert de données de l'unité centrale à une unité périphérique (2 à 6) parmi la pluralité d'unités périphériques (2 à 6) connectées par l'intermédiaire du support de communication (7), les étapes supplémentaires suivantes sont effectuées :
- moduler le paramètre avec un flux de données vers l'unité centrale de manière à ce que le paramètre reste à l'intérieur de l'intervalle (12-16 ; U2-U6) ;
- démoduler le paramètre au niveau de l'unité périphérique adressée (2 à 6) afin de restituer le flux de données.

6. Procédé selon la revendication 2, **caractérisé en ce qu'**en plus d'un transfert de données de l'unité périphérique (2 à 6) parmi la pluralité d'unités périphériques (2 à 6) connectées par l'intermédiaire d'un support de communication (7) vers l'unité centrale, les étapes supplémentaires suivantes sont effectuées :
- moduler le paramètre avec un flux de données au niveau de l'unité périphérique (2 à 6) de manière à ce que le paramètre reste à l'intérieur de l'intervalle (12-16 ; U2-U6),
- démoduler le paramètre au niveau de l'unité centrale afin de restituer le flux de données.

7. Procédé de communication de données entre une unité centrale et une unité périphérique d'un système de communication dans lequel, pour la transmission de données de l'unité centrale vers l'unité périphérique, un procédé selon la revendication 5 est mis en oeuvre et en ce que pour la transmission de données de l'unité périphérique vers l'unité centrale, un procédé selon la revendication 6 est mis en oeuvre, **caractérisé en ce que**, pour la transmission de données de l'unité centrale vers l'unité périphérique, un autre paramètre que celui destiné à la transmission de données de l'unité périphérique vers l'unité centrale est modulé.

8. Système de communication comportant une unité centrale (1) et une pluralité d'unités périphériques (2 à 6) qui sont connectées par l'intermédiaire d'un support de communication (7), dans lequel les unités périphériques (2 à 6) sont raccordées au support de communication (7) en parallèle les unes par rapport aux autres et dans lequel un signal est apte à se propager sur le support de communication (7), **caractérisé en ce qu'**à chaque unité périphérique est associé un intervalle (12-16 ; U2-U6) d'un paramètre du signal, **en ce que** l'unité centrale comprend un circuit générateur d'adresse destiné à délivrer le signal avec une valeur du paramètre se situant dans l'intervalle associé à une unité périphérique devant être adressée et **en ce que** chaque unité périphérique comprend un circuit décodeur d'adresse qui réagit lorsqu'il reçoit le signal ayant une valeur du paramètre se situant dans l'intervalle associé à l'unité périphérique.

9. Système de communication selon la revendication 10, **caractérisé en ce que** l'unité centrale comporte un émetteur destiné à moduler le signal avec un flux de données et **en ce que** chaque unité périphérique comporte un récepteur pouvant être activé par la réponse du circuit décodeur d'adresse pour démoduler le signal et restituer le flux de données.

10. Système de communication selon la revendication 10 ou 11, **caractérisé en ce que** chacune desdites unités périphériques comporte un émetteur pouvant être activé par la réponse du circuit décodeur d'adresse pour moduler le signal avec un flux de données et **en ce que** l'unité centrale comporte un récepteur destiné à démoduler le signal et à restituer le flux de données.

11. Système de communication comportant une unité centrale (1) et une pluralité d'unités périphériques (2 à 6) qui sont connectées par l'intermédiaire d'un support de communication (7), dans lequel les unités périphériques (2 à 6) sont raccordées au support de communication (7) en parallèle les unes par rapport aux autres et dans lequel un signal est apte à se propager sur le support de communication (7), **caractérisé en ce qu'**à chaque unité périphérique est associé un intervalle respectif (12-16 ; U2-U6) d'un paramètre du signal, **en ce que** chaque unité périphérique comprend un circuit générateur d'adresse destiné à délivrer le signal avec une valeur du paramètre se situant dans l'intervalle associé à ladite unité périphérique et **en ce que** l'unité centrale comprend un circuit décodeur d'adresse qui identifie l'unité périphérique générant le signal sur la base de la valeur du paramètre.

12. Système de communication selon la revendication 13, **caractérisé en ce que** chaque unité périphérique comporte un émetteur destiné à moduler le signal avec un flux de données et **en ce que** l'unité centrale comporte un récepteur destiné à démoduler le signal et à restituer le flux de données.
